# EUROPEAN PATENT SPECIFICATION

(11) **EP 1 025 756 B1**
(45) Date of publication and mention of the grant of the patent: **10.08.2005**
(21) Application number: 98946216.3
(22) Date of filing: 30.09.1998
(51) Int. Cl.: A01N 25/00, A01N 33/12, C04B 38/00

(54) **A POROUS FORMING ARTICLE FOR ELIMINATING HARMFUL MICROORGANISMS AND A PROCESS OF PRODUCING IT**
PORENFORMENDER GEGENSTAND ZUR BESEITIGUNG SCHÄDLICHER MIRKOORGANISMEN UND VERFAHREN ZU SEINER HERSTELLUNG
ARTICLE A TENDANCE POREUSE PERMETTANT D'ELIMINER DES MICRO-ORGANISMES NUISIBLES ET PROCEDE DE FABRICATION DUDIT ARTICLE

(30) Priority: 20.10.1997 CN 97121335
(43) Date of publication of application: 09.08.2000
(73) Proprietor: Hsiao, Yenkuen, Taipei (CN)
(72) Inventor: Hsiao, Yenkuen, Taipei (CN)
(74) Representative: Molyneaux, Martyn William
(86) International application number: PCT/CN1998/000207
(87) International publication number: WO 1999/020105

(56) References cited:
- EP-A- 0 355 765
- EP-A1- 0 352 337
- EP-A1- 0 758 633
- CN-A- 1 054 244
- CN-A- 1 064 857
- CN-A- 1 102 051
- CN-A- 1 129 197
- US-A- 4 406 892
- US-A- 4 682 992
- US-A- 5 013 459

## Description

The present invention relates to a filter for killing or inhibiting microbes, and to a method of treating air or water with such a filter.

Public locations, especially areas such as swimming pools and public bathhouses are prone to the spread of disease, if the sanitary conditions of such places are not well maintained. In particular there is a risk of skin disease, eye disease, or even pneumonia. To prevent multiplication of harmful microbes in such areas, the usual treatment is to add chlorine disinfectant.

Sterilizing and disinfecting agents are added to the water, in fountains, sauna baths and water tanks etc. which provide people or animals with drinking water or recreational facilities. Conventionally an antimicrobial component such as chlorine, disinfecting agent, algae-killing agent etc. is added directly.
However, since water flows away, the antimicrobial content will be reduced accordingly. Thus, frequent addition of the antimicrobial component is required. This, of course, increases costs. Furthermore, environment pollution may also be created by the material carried away by the water. In addition, the antimicrobial component may be ingested in drinking water or food, or directly absorbed through the human skin. This is prejudicial to health over a period of time.

Additionally, many occurrences of poisoning in Japan arose from microbial infection in 24-hour circulating hot water systems in bathrooms. The root cause of such problems is that the such circulating hot water systems are mainly for personal use in a family, and hence most of the users are reluctant or neglect to add the antimicrobial component to the water; and therefore, are liable to infection by harmful microbes which multiply in the circulating water.

Additionally airborne diseases represent a danger. For example, Legionella pneumophila grows in the cooling towers of air conditioning systems then spreads from the air conditioning system. Also the Streptococcus pneumonia and Corynebacturium diphtheria viruses etc. are spread in the air directly. To prevent infection by such viruses, an article capable of killing or inhibiting the harmful microbes is required which could be provided e.g. at the cool air outlet of an air conditioning system or the safety system of a laboratory.

US 5,013,459 discloses a method and device for dispensing a sterile aqueous fluid. A quantity of aqueous fluid (such as ophthalmic saline solution) is stored in a reservoir within a portable container having an outlet, and a porous filter medium (which may be a high surface area particulate material such as ceramic) is arranged within the container adjacent to the outlet, through which the aqueous fluid passes. An antimicrobially effective amount of an organosilicon quaternary ammonium compound is covalently bonded to it. A preferred organosilicon quaternary ammonium compound is 3-(trimethoxysilyl)propyldimethyloctadecyl ammonium chloride.

US 4,682,982 discloses organosilicon quaternary ammonium compounds (such as octadecyl-dimethyl (3-(trimethoxysilyl)propyl) ammonium chloride) and other microbicidal compounds bound to the surface of discrete inorganic particles such as glass spheres. Inorganic particles coated with the microbicidal compounds can be used in hospital fluidized beds and air filters.

US 4,406,892 discloses the use of organosilicon quaternary ammonium compounds (such as N-(3-trimethoxysilyl)propyldimethyloctadecylammonium chloride) as antimicrobial agents. Substrates e.g. fabrics, paper, glass or ceramic having free hydroxyl groups on their surfaces can be impregnated with these compounds, so that the growth of disease causing microorganisms in and on the substrates is inhibited.

EP-A-355,765 discloses a method of inhibiting the transmission and occurrence of disease in structures employing forced or induced air ventilation, heating, humidification and air conditioning systems. Interior fabric surfaces of the structure are treated with alkoxysilane quaternary ammonium compounds, such as 3-trimethoxysiyl)propyldimethyloctadecyl ammonium chloride, which are bonded to and immobilised on the fabric surface.

An objective of this invention is to provide a novel filter and method for killing or inhibiting the growth of bacteria, algae or fungi in aqueous media without leaving germicide behind to harm other living beings and contaminate the environment.

The invention provides a filter for killing or inhibiting microbes in a fluid contacted by the filter, the filter comprising a siliceous substrate treated with an anti-microbial silyl quaternary ammonium salt which forms a covalent -Si-O-bond to said substrate characterised in that said siliceous substrate is a porous formed article which can be fitted inside a fluid cleaning system.

Quaternary ammonium salts inhibit viruses (such as Bacillus coli. Salmanella typhimuriurn etc.), Saccharomycetes (such as Saccharomyces cerevisiae, Candida albicans), algae groups (such as Blue Green Algae, Brown Algae and Green Algae) and bacteria such as Chaetomium globosum, Penicillium funiculosum etc.

The quaternary ammonium salt can have the formula: 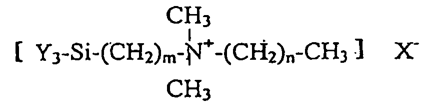 wherein m+n is 16 to 19, m is 1 to 6, and n is 13 to 17; or m+n is 20 to 23, m is 4 to 11 and n is 9 to 17; X is halogen; and Y is a hydrolysable radical or hydroxyl quaternary ammonium salts, e.g. 3-(trimethoxysilyl) propyloctadecyldimethyl ammonium chloride kill E. Coli, Legionella pneumophila, and Salmonella typhosa.

The term "porous" in this application means having a high ratio of surface area; cubic volume, as exemplified by a beehive type, or a sponge type of porosity. As long as liquid or air can flow through the filter and be treated, the pore size is immaterial. The term "formed article" includes various shapes such as square shape, a polygon shape, a disc shape or a ball shape. As long as the intended purpose can be achieved there is no limitation on size.

The porous formed article of this invention includes a porous vehicle body and the antimicrobial component on it. Since the article of this invention is a porous type with high ratio of surface area, the antimicrobial component can be distributed thereon and has enhanced effectiveness in killing or inhibiting harmful microbes.

The porous substrate can be of various materials including plastic, steel etc. which preferably resists the effects of temperature and pressure variations.

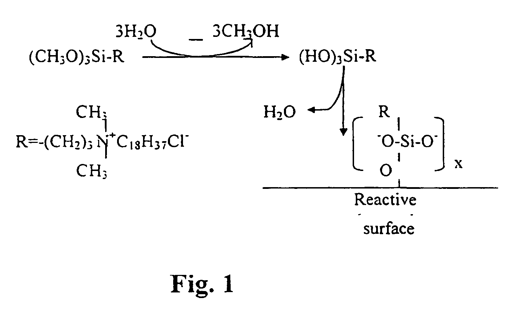

The quaternary ammonium salt used in this invention forms -Si(OH)₃, groups on addition to water and can form a chemical bond with the SiO₂ groups on the surface of a substrate and can thereby be closely attached to the surface. 3-(Trimethoxysilyl)-propyldimethyloctadecyl ammonium chloride is representative of a group of silyl quaternary ammonium compounds that can be used in the present invention. When the silyl quaternary ammonium compounds are treated with acidic water, the alkoxysilane group is hydrolyzed to form silanal which then is reacted with the siliceous surface of the substrate to form chemical covalent bond as shown on Fig. 1.

Hence the active component does not wash away even after a long period of use and; thus, antimicrobial effectiveness is monitored for a long period.

The antimicrobial activity of the filter can be regenerated by specific treatment. For example the filter can be washed by alkali such as salt water, in order to recover its antimicrobial activity.

The filter can be used in a flowing water area such as a swimming pool, a public bathhouse, a 24-hour hot water circulation bathroom, a fishery breeding place, a water filter device or a drinking tap etc. and air conditioning system to remove harmful microbes. The filter can also be used in a filtering device for medical or laboratory use, an air cleaner or a safety system for protecting against microbes in a laboratory. When the water area to be treated is a small area such as an aquatic tank, even though the inside water estrangement, the filter is still effective.

In case to use the filter in flowing water, it is preferred to locate the filter at the water inlet/outlet or inside a water circulation device to enable the filter act effectively. For example: when used for a 24-hour circulating bathroom water system, the filter can be fitted inside the circulation pump. When used in an air conditioning system, an air cleaner, a filtering device for medical or laboratory use or a safety system for protecting against microbes in a laboratory, the filter should be located in the front of air or fluid outlet.

Preferred embodiments of the invention are described below by way of example only with reference to Figures 1 to 5 of the accompanying drawings, wherein:
Fig. 1 shows the chemical bonding formed between the quaternary ammonium salt and the vehicle body (substrate) in water;
Fig. 2 shows the correlation between the dissolving rate of the antimicrobial component carried by the filter of this invention in the water and time;
Fig. 3 is a schematic view of a porous formed filter of this invention;
Fig. 4 illustrates the antimicrobial effect of porous formed filter with and without the quaternary ammonium salt;
Fig. 5 shows the survival count of harmful microbes overtime when exposed to a porous formed filter carrying a quaternary ammonium salt.

### Embodiment 1

A quaternary ammonium salt was dissolved in water to form 100ml solution. A 50g substrate (honeycomb) having high surface area was saturated in the solution (using at least 50% of the solution) then dried at 100°C for around 30min. to form chemical bonds and form a treated porous formed filter capable of killing or inhibiting harmful microbes.

The quaternary ammonium salt of this embodiment can be 3-(trimethoxysilyl)-propyldimethyloctadecyl ammonium chloride or any other quaternary ammonium salt which can form covalent chemical bonds with SiO₂.

### Experiment 1 - bonding strength

A standard-colored-solution was obtained by adding a fixed amount of Bromophenol Blue to several sample solutions of quaternary ammonium salt in different concentrations. The quaternary ammonium salt was dissolved in water to form an impregnating solution, 10 pieces of the substrate were dipped in the same volume of solution produced under the same conditions and numbered 1,2,3,....8, 9 and 10. The samples were then dried in an oven.

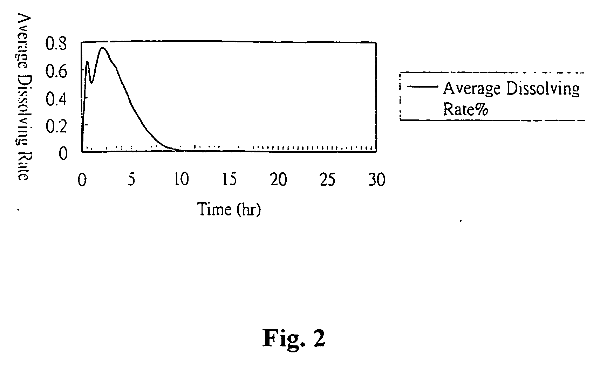

Each of the aforesaid samples was put in a beaker containing 500ml of water, which was then put in a supersonic wave washing machine vibrating for 0.5-20 hours under 75W power. Then, each of them was taken out and a fixed quantity of Bromophenol Blue added to determine the dissolved quantity of a quaternary ammonium salt in water. The correlation between the dissolving rate of the quaternary ammonium salt in water and the dissolving time is as shown Table 1-1 and Fig. 2.

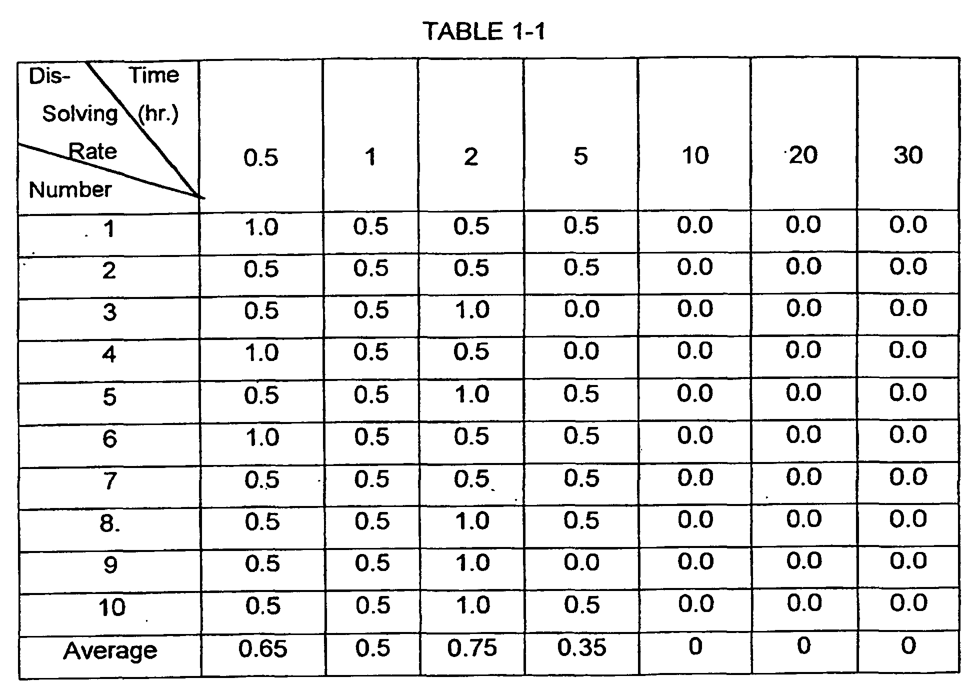

From above Table 1-1 and Fig. 2, it is seen that the above method clearly enhances the attaching of the quaternary ammonium salt to the substrate and proves the bonding strength of the quaternary ammonium salt to the substrate. Experiments also show that the antimicrobial component cannot be easily stripped off or washed away by the effect of the external environment.

### Experiment 2 - Killing or inhibition of Legionella pneumophila

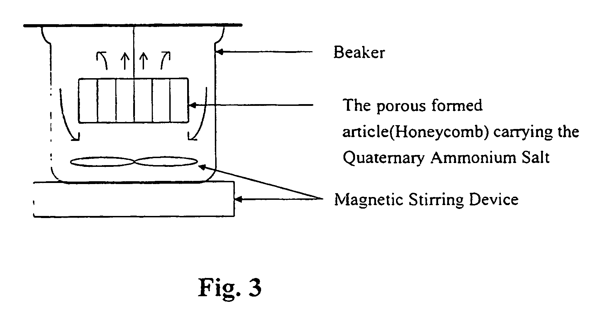

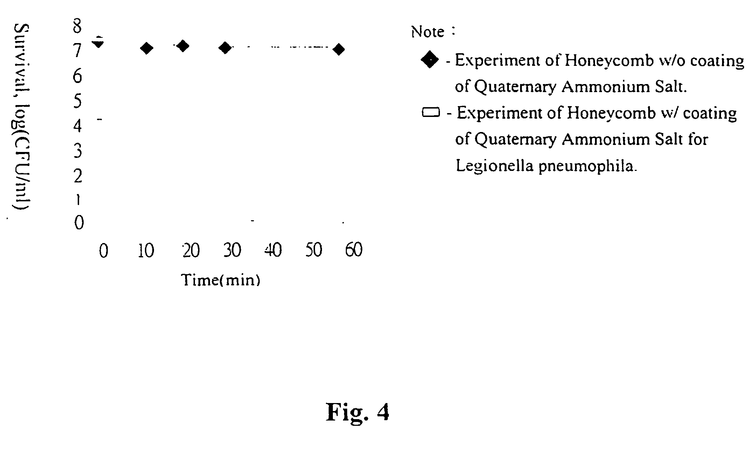

Before experiment, the bacterium Legionella pneumophila was incubated at 35° for 24 hr and the cell count of the bacterium was determined. Porous formed articles (honeycomb structure) were sterilized in an oven (100°C, 3hr) prior to the experiment. As shown in Fig. 3, a porous formed article was then hung in a sterile 500-ml beaker, having a magnetic rod placed on the bottom. 500 ml of water-diluted cell suspension (around 2.0 x 10⁷ CFU/ml) of the above-mentioned bacterium was poured into the beaker. The suspension was then stirred to create a swirl on the top of the liquid. Cell counts of the suspension were made at 0, 10, 20, 30, 40, 50 and 60 min. The experiment was duplicated. The resulting survival curve of Legionella pneumophila suspended in water after treatment by the porous formed articles is shown in Fig. 4.

In Fig. 3: 1 is a cup; 2 represents a quaternary ammonium salt - impregnated sample; and 3 is a magnetic agitating device.

Fig. 4 shows the comparison of the antimicrobial effect of porous formed articles with and without the quaternary ammonium salt.

### Experiment 2 - Killing or inhibition of Bacillus coli and Salmonella typhimurium

The following steps were performed:
1. Incubating the bacteria Bacillus coli CCRC11634 and Salmonella typhimurium CCRC12947 (35°C, 24 hr.) and determining the cell count of the respective original bacteria.
2. Pouring a 5 ml cell suspension of the bacteria mentioned in above step 1 into 495 ml of sterile water and then mixing uniformly.
3. Putting a porous formed article coated with quaternary ammonium salt into the device shown in Fig. 3 and then pouring in 400 ml of the cell suspension of step 2.
4. Starting to stir the fluid, and determining the bacteria count once every 10 minutes for 30 minutes.
5. Taking 0.1 ml and smearing it on a thin glass sheet and then determining the bacteria count after incubation for 48 hr. at 35°C.

### Results

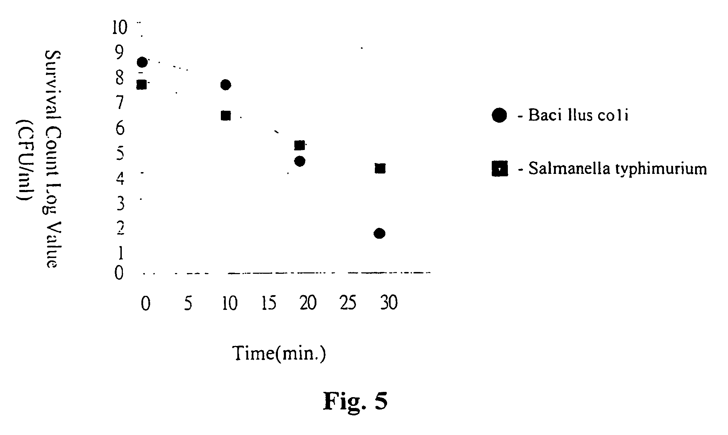

The survival curve of the tested bacterium suspended in water after treatment by the porous formed articles (honeycomb structure) are shown in Fig. 5. The excellent effectiveness can be clearly seen especially for Bacillus coli.

Since the antimicrobial component is carried on a porous vehicle body, the antimicrobial component will not pollute the environment (such as when exposed to flowing water) or harm human health. Furthermore there is a cost saving, since the antimicrobial activity of the antimicrobial component is recoverable by washing with alkali such as salt water. Thus the useful life is prolonged.

In particular, the filter of the invention can also be used for killing or inhibiting harmful microbes in air conditioning systems or in the air; therefore, it is possible to kill or inhibit some airborne viruses, such as Legionella pneumophila, a result which is still not achievable using known technology.

## Claims

1. A filter for killing or inhibiting microbes in a fluid contacted by the filter, the filter comprising a siliceous substrate treated with an anti-microbial silyl quaternary ammonium salt which forms a covalent -Si-O- bond to said substrate **characterised in that** said siliceous substrate is a porous formed article which can be fitted inside a fluid cleaning system.

2. A filter according to claim 1, which retains said anti-microbial silyl quaternary ammonium salt thereon when subjected to ultrasonic agitation.

3. A filter according to claim 1 wherein said substrate is composed of earthenware or porcelain.

4. A filter according to claim 1 or claim 3 wherein said substrate member has a honeycomb structure.

5. A filter according to any preceding claim wherein said anti-microbial silyl quaternary ammonium salt is 3-(trimethoxysilyl) propyloctadecyldimethyl ammonium chloride.

6. A fluid cleaning system comprising a pump and a filter as claimed in any preceding claim, the pump being arranged in use to pump fluid through the filter.

7. A method of treating air or water to inhibit growth of microbes, comprising pumping the air or water through a filter as claimed in any of claims 1 to 5.

8. A method according to claim 7, further comprising the preliminary step of subjecting the filter to ultrasonic agitation.

9. A method as claimed in claim 7, wherein air is treated to kill or inhibit Legionella pneumophila.

## Patentansprüche

1. Filter zum Abtöten oder Hemmen von Mikroorganismen in einem Fluid, welches mit dem Filter kontaktiert wird, wobei das Filter ein siliciumhaltiges Substrat aufweist, das mit einem antimikrobiellen, quaternären Silyl-Ammoniumsalz behandelt ist, welches mit dem Substrat eine kovalente -Si-O-Bindung eingeht,
**dadurch gekennzeichnet, dass** das siliciumhaltige Substrat ein poröser, geformter Gegensand ist, der in ein Fluid-Reinigungssystem eingesetzt werden kann.

2. Filter nach Anspruch 1, welches sein antimikrobielles, quaternäres Silyl-Ammoniumsalz darauf behält, wenn es einer Ultraschallbewegung unterworfen wird.

3. Filter nach Anspruch 1, wobei das Substrat aufgebaut ist aus Steingut oder Porzellan.

4. Filter nach Anspruch 1 oder 3, wobei das Substrat-Teil eine Wabenstruktur hat.

5. Filter nach einem der vorgenannten Ansprüche, wobei das antimikrobielle, quaternäre Silyl-Ammoniumsalz 3-(Trimethoxysilyl)propyl-octadecyl-dimethylammoniumchlorid ist.

6. Fluid-Reinigungssystem, aufweisend eine Pumpe und ein Filter nach einem der vorgenannten Ansprüche, wobei die Pumpe im Gebrauch so angeordnet ist, dass sie Fluid durch das Filter pumpt.

7. Verfahren zum Behandeln von Luft oder Wasser zum Hemmen des Wachstums von Mikroorganismen, umfassend das Pumpen von Luft oder Wasser durch ein Filter nach einem der Ansprüche 1 bis 5.

8. Verfahren nach Anspruch 7, ferner umfassend den vorgeschalteten Schritt, das Filter einer Ultraschallbewegung zu unterwerfen.

9. Verfahren nach Anspruch 7, wobei Luft behandelt wird, um Legionella pneumophila zu töten oder zu hemmen.

## Revendications

1. Filtre pour tuer ou inhiber des microbes dans un fluide mis en contact avec le filtre, le filtre comprenant un substrat siliceux traité avec un sel anti-microbien d'ammonium quaternaire à groupe silyle qui forme une liaison covalente -Si-O- avec ledit substrat, **caractérisé en ce que** ledit substrat siliceux est un article poreux façonné qui peut être adapté à l'intérieur d'un système de nettoyage de fluide.

2. Filtre selon la revendication 1, qui retient ledit sel anti-microbien d'ammonium quaternaire à groupe silyle sur son dessus lorsqu'il est soumis à une agitation ultrasonique.

3. Filtre selon la revendication 1, dans lequel ledit substrat est constitué de faïence ou de porcelaine.

4. Filtre selon la revendication 1 ou la revendication 3, dans lequel ledit élément de substrat présente une structure en nid d'abeilles.

5. Filtre selon l'une quelconque des revendications précédentes, dans lequel ledit sel anti-microbien d'ammonium quaternaire à groupe silyle est le chlorure de 3-(triméthoxysilyl)propyloctadécyldiméthylammonium.

6. Système de nettoyage de fluide comprenant une pompe et un filtre selon l'une quelconque des revendications précédentes, la pompe étant disposée lors de l'utilisation pour pomper du fluide à travers le filtre.

7. Procédé de traitement d'air ou d'eau pour inhiber la croissance de microbes comprenant le pompage de l'air ou de l'eau à travers un filtre selon l'une quelconque des revendications 1 à 5.

8. Procédé selon la revendication 7 comprenant en outre l'étape préliminaire consistant à soumettre le filtre à une agitation ultrasonique.

9. Procédé selon la revendication 7, dans lequel de l'air est traité pour tuer ou inhiber la Legionella pneumophila.
